# EUROPÄISCHE PATENTSCHRIFT

(11) **EP 4 572 648 B1**
(45) Veröffentlichungstag und Bekanntmachung des Hinweises auf die Patenterteilung: **29.04.2026**
(21) Anmeldenummer: 23744832.9
(22) Anmeldetag: 26.07.2023
(51) Int. Cl.: A47L 9/30, A47L 9/32

(54) **STAUBSAUGER**
VACUUM CLEANER
ASPIRATEUR

(30) Priorität: 17.08.2022 BE 202205644
(43) Veröffentlichungstag der Anmeldung: 25.06.2025
(73) Patentinhaber: Miele & Cie. KG, 33332 Gütersloh (DE)
(72) Erfinder: HOLLENHORST, Matthias, 59556 Lippstadt (DE); SIEGHOLT, Ben, 50670 Köln (DE); RÜTTEN, Felix, 33602 Bielefeld (DE)
(86) Internationale Anmeldenummer: PCT/EP2023/070708
(87) Internationale Veröffentlichungsnummer: WO 2024/037846

(56) Entgegenhaltungen:
- DE-U1- 202017 104 648
- JP-A- 2007 267 779

## Beschreibung

Die Erfindung betrifft einen Staubsauger. Insbesondere betrifft die Erfindung einen Staubsauger mit einem Handteil und einem Zubehörteil.

Ein Saugvorgang mit einem Staubsauger in einem schlecht ausgeleuchteten Bereich wird durch eine Beleuchtung der zu reinigenden Fläche signifikant erleichtert. Daher können Staubsauger eine Lichtquelle aufweisen, die im Handteil platziert ist. Staubsauger mit einer Lichtquelle im Handteil beleuchten den zu reinigenden Bereich bei aufgestecktem Zubehörteil signifikant schlechter, da der Abstand zum zu reinigenden Bereich größer wird.

Die JP-A-2007267779 offenbart einen Staubsauger mit einem Handteil, das eine Lichtquelle aufweist, und einem Zubehörteil, das mit dem Handteil koppelbar ist und einen Lichtleiter aufweist.

Der Erfindung stellt sich somit das Problem, einen Staubsauger bereitzustellen, der ausgebildet ist, eine gleichbleibende Qualität der Ausleuchtung zu erreichen, unabhängig ob, wie viele und welche Zubehörteile mit dem Handteil oder aneinander gekoppelt sind. Zudem soll der Staubsauger kostengünstig sein.

Erfindungsgemäß wird dieses Problem durch einen Staubsauger mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer gleichbleibenden Qualität der Ausleuchtung unabhängig davon, ob ein oder mehrere Zubehörteile mit dem Handteil verwendet werden, in Kostenvorteilen. Da weitere Lichtquellen in Zubehörteilen nicht benötigt werden, sind die Fertigungskosten verringert.

Die Erfindung betrifft einen Staubsauger mit einem Handteil, das eine Lichtquelle und einen Lichtleiter aufweist, und mindestens einem Zubehörteil, das mit dem Handteil koppelbar ist und einen weiteren Lichtleiter aufweist, wobei der Lichtleiter eine linsenförmige Oberfläche aufweist, so dass er bei Betrieb als ein Lichtaustrittskörper fungiert, wenn das Handteil und das mindestens eine Zubehörteil entkoppelt sind, und als Lichtkopplungsstelle für den weiteren Lichtleiter fungiert, wenn das Handteil und das mindestens eine Zubehörteil gekoppelt sind.

Der Staubsauger ist bevorzugt als ein Handgerät ausgebildet, bevorzugter als Handstaubsauger oder Stiel-, Stab bzw. Stick-Staubsauger. Bevorzugt ist der Staubsauger als Akku-Staubsauger ausgebildet, d.h. er weist einen Akkumulator bzw. Batterie auf. Das Handteil dient dazu, von dem Nutzer während des Betriebs gegriffen zu werden und weist bevorzugt einen Handgriff auf. Das mindestens eine Zubehörteil ist bevorzugt als Düse wie eine Saugdüse oder Rohr wie eine Verlängerungsrohr ausgebildet. Das Handteil und das mindestens eine Zubehörteil sind derart ausgebildet, dass sie miteinander gekoppelt werden können, wenn der Nutzer das Zubehörteil nutzen will. Bevorzugt sind das Handteil und das mindestens eine Zubehörteil ausgebildet, über eine Steckverbindung lösbar gekoppelt zu werden. Das Handteil ist aber derart ausgebildet, dass es eigenständig als Staubsauger genutzt werden kann, so dass es auch von dem mindestens einen Zubehörteil entkoppelt bzw. mit dem mindestens einen Zubehörteil nicht gekoppelt bzw. ungekoppelt einsetzbar ist. Bevorzugt enthält das Handteil alle zur Funktion des Staubsaugens erforderlichen Staubsauger-Komponenten. Alternativ bevorzugt ist das Handteil mit den zum Funktionieren als Staubsauger essenziellen Staubsauger-Komponenten koppelbar.

Der Staubsauger weist ein Lichtleitersystem auf, das ermöglicht, Licht, das im Handteil des Staubsaugers erzeugt wird, aus dem Handteil auszukoppeln, wenn es ohne Zubehörteil verwendet wird, und durch ein oder mehrere gekoppelte Zubehörteile zu leiten und aus ihm oder ihnen auszukoppeln, wenn das Handteil mit dem mindestens einen Zubehörteil gekoppelt ist. Bevorzugt weisen die Enden des Lichtleiters des Handteils jeweils eine linsenförmige Oberfläche auf, so dass der Lichtleiter Licht möglichst effektiv in den weiteren Lichtleiter des mit dem Handteil gekoppelten Zubehörteils überträgt, wenn das Zubehörteil mit dem Handteil gekoppelt ist, und so dass der Lichtleiter Licht so auskoppeln kann, dass die Saugstelle für den Nutzergut ausgeleuchtet wird, wenn kein Zubehörteil mit dem Handteil gekoppelt ist.

Die Beleuchtungseinheit, die in dem Handteil des Staubsaugers platziert ist, umfasst oder bevorzugter besteht im Wesentlichen aus zwei Komponenten, der Lichtquelle und dem Lichtleiter. Der Lichtleiter hat die Aufgabe das Licht der Lichtquelle einzufangen, zu bündeln und an der Austrittsfläche wieder in Richtung des Saugbereichs auszukoppeln. In einer bevorzugten Ausführungsform weist der Lichtleiter eine Einkoppeloptik und eine Auskoppeloptik auf, die jeweils als Linsen ausgebildet sind. Diese Linsen stellen die linsenförmige Oberfläche des Lichtleiters dar. Für die Bündelung und die Lichtauskopplung sind an den Enden des Lichtleiters bevorzugt zwei Linsen angeformt. Wenn das Handteil mit dem mindestens einem Zubehörteil gekoppelt ist, weist die Beleuchtungseinheit die in das Handteil integrierte Lichtquelle und das Lichtleitsystem aus dem Lichtleiter und dem weiteren Lichtleiter auf. Eine weitere Lichtquelle im Zubehörteil wird nicht benötigt.

Bevorzugt sind die Linsen des Lichtleiters im Handteil konvex. D.h., jede der Linsen der Einkoppeloptik und der Auskoppeloptik ist konvex ausgebildet.

In einer bevorzugten Ausführungsform ist die Linse der Auskoppeloptik an ihrer Lichtaustrittsfläche zu einer optischen Achse des Lichtleiters um den vorbestimmten Winkel geneigt. Der vorbestimmte Winkel liegt bevorzugt im Bereich von 10 bis 14°. Der Grund dafür liegt darin, dass das Licht nicht symmetrisch zum Lichtleiter austreten soll, sondern in einem Winkel zur optischen Achse des Lichtleiters, der eine optimale Beleuchtung des Saugbereichs gewährleistet.

Bevorzugt weist der Lichtleiter einen kreisrunden oder im Wesentlichen kreisrunden Querschnitt auf. Bevorzugt weist der Lichtleiter einen Durchmesser auf und weist die Linse der Auskoppeloptik einen Radius auf, der dem Durchmesser entspricht oder im Wesentlichen entspricht. Bevorzugt liegen der Durchmesser und der Radius jeweils im Bereich von 2 bis 6 mm, bevorzugter 3 bis 5 mm.

In einer bevorzugten Ausführungsform ist die Linse der Einkoppeloptik parabolisch oder sphärisch ausgebildet ist. Die Einkoppeloptik in Form der Linse ist bevorzugt als eine konvexe Oberfläche ausgebildet, die entweder parabolisch oder sphärisch ausgeführt ist. Die Lichtquelle ist bevorzugt derart ausgebildet, dass sie daran angepasst ist.

Bevorzugt ist die Linse der Auskoppeloptik sphärisch ausgebildet. Die Auskoppeloptik in Form der Linse ist bevorzugt als eine konvexe Oberfläche ausgebildet, die sphärisch ausgeführt ist. Bevorzugter ist die Auskoppeloptik als eine konvexe, sphärische Linse mit einem Radius im Bereich von 2 bis 6 mm, bevorzugter 3 bis 5 mm, ausgebildet, die um einen vorbestimmten Winkel von 10 bis 14° zur optischen Achse des Lichtleiters geneigt ist. Wenn beispielsweise die Linse der Auskoppeloptik um den vorbestimmten Winkel von 12° zur optischen Achse des Lichtleiters geneigt ist, ergibt sich eine Neigung der optischen Achse des Lichtkegels um ca. 18°.

In einer bevorzugten Ausführungsform weist der weitere Lichtleiter eine weitere Einkoppeloptik und eine weitere Auskoppeloptik auf, die jeweils als Linsen ausgebildet sind. Dadurch wird eine Lichtschnittstelle zwischen dem Lichtleiter und dem weiteren Lichtleiter bereitgestellt, die ermöglicht, Licht von dem Lichtleiter in den weiteren Lichtleiter möglichst verlustfrei zu übertragen. So kann dann am Ende des Lichtweges, also beispielsweise in dem mit dem Handteil gekoppelten Zubehörteil, in das der weitere Lichtleiter integriert ist, ohne Schattenwurf ausgekoppelt werden und den Saugbereich homogen ausleuchten. Die Linse der weiteren Einkoppeloptik ist bevorzugt als eine Negativform der Linse der Auskoppeloptik ausgebildet, und die Linse der weiteren Auskoppeloptik ist bevorzugt gleich oder im Wesentlichen gleich zu der Linse der Auskoppeloptik des Lichtleiters im Handteil ausgebildet ist. Wenn das Handteil und das mindestens eine Zubehörteil gekoppelt sind, sind die Enden des Lichtleiters und des weiteren Lichtleiters bevorzugt sehr nah zusammengeführt. Bevorzugt ist ein Abstand zwischen der Linse der Auskoppeloptik und der Linse der weiteren Einkoppeloptik kleiner als 0,5 mm, wenn das Handteil mit dem mindestens einen Zubehörteil gekoppelt ist. Bevorzugt sind der Durchmesser und der Radius der Linse des weiteren Lichtleiters identisch oder im Wesentlichen identisch mit dem Durchmesser und dem Radius der Linse des Lichtleiters.

Bevorzugt weist der Staubsauger mehrere Zubehörteile auf, die miteinander koppelbar sind. Dadurch sind die Zubehörteile nicht nur jeweils mit dem Handteil, sondern auch miteinander koppelbar. Jedes der mehreren Zubehörteile weist bevorzugt jeweils einen eigenen weiteren Lichtleiter auf. Die mehreren Zubehörteile sind bevorzugt in Bezug auf den weiteren Lichtleiter identisch oder im Wesentlichen identisch ausgebildet, so dass wenn eines der mehreren Zubehörteile mit dem Handteil und einem weiteren der Zubehörteile gekoppelt ist, der Lichtleiter mit den weiteren Lichtleitern ein Lichtleitsystem ausbildet.

In einer bevorzugten Ausführungsform ist die Lichtquelle als eine LED (Leuchtdiode) ausgebildet. Eine Leuchtdiode weist einen geringen Energieverbrauch und eine lange Lebensdauer auf.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: eine Seitenansicht eines erfindungsgemäßen Staubsaugers;
- Fig. 2: eine vergrößerte Teil-Seitenansicht des in Fig. 1 gezeigten Staubsaugers;
- Fig. 3: eine vergrößerte Teil-Seitenansicht des in Fig. 2 gezeigten Lichtleiters;
- Fig. 4: eine Teil-Seitenansicht des in Fig. 3 gezeigten Lichtleiters;
- Fig: 5: eine weitere vergrößerte Teil-Seitenansicht des in Fig. 1 gezeigten Staubsaugers;
- Fig. 6: eine vergrößerte Seitenansicht des in Fig. 5 gezeigten Lichtleiters und weiteren Lichtleiters; und
- Fig. 7: eine Seitenansicht einer Variante des in Fig. 1 gezeigten Staubsaugers.

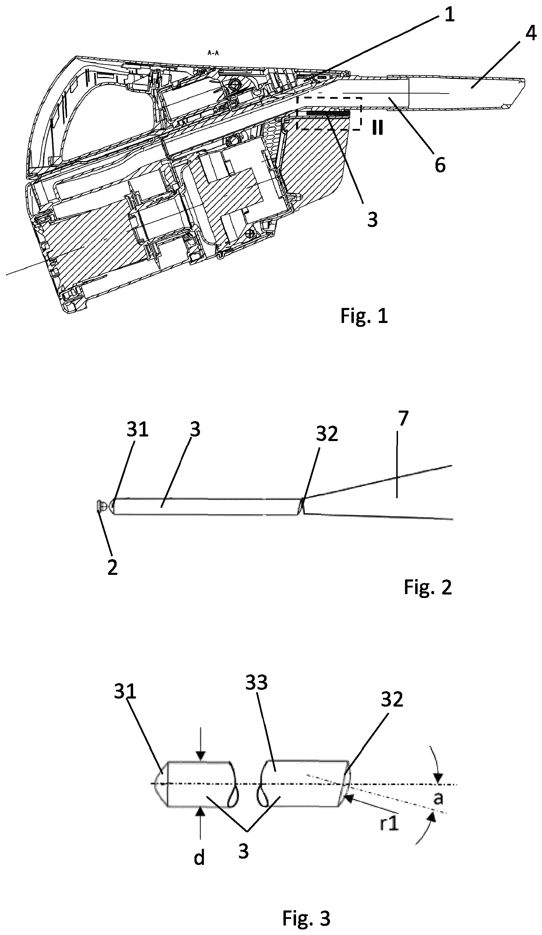

Fig. 1 zeigt eine Seitenansicht eines erfindungsgemäßen Staubsaugers. Der erfindungsgemäße Staubsauger weist ein Handteil 1 auf, das von einem Nutzer des Staubsaugers bei Betrieb mit der Hand gegriffen und von ihr gehalten werden kann. Das Handteil weist eine Lichtquelle 2 und einen Lichtleiter 3 auf. Das Handteil 1 vereint alle zum Saugen notwendigen Staubsauger-Komponenten und ist eigenständig zum Saugen einsetzbar. Der Staubsauger weist weiterhin mindestens ein Zubehörteil 4 auf, das mit dem Handteil 1 koppelbar ist und in Fig. 1 gekoppelt gezeigt ist. Das Handteil 1 ist mit dem Zubehörteil 4 mittels einen Verbindungsabschnitts 6 über eine Steckverbindung gekoppelt. Bevorzugt ist der Verbindungsabschnitt 6 dabei so ausgebildet, dass das Handteil 1 und das Zubehörteil nur in einer Stellung zueinander positioniert werden können. Das Zubehörteil weist einen weiteren Lichtleiter (nicht gezeigt) auf und ist beispielhaft als Düse ausgebildet. Der Lichtleiter 3 weist eine linsenförmige Oberfläche auf, so dass er bei Betrieb als ein Lichtaustrittskörper fungiert, wenn das Handteil 1 und das Zubehörteil 4 entkoppelt sind, und als Lichtkopplungsstelle für den weiteren Lichtleiter fungiert, wenn das Handteil 1 und das Zubehörteil 4 gekoppelt sind.

Fig. 2 zeigt eine vergrößerte Teil-Seitenansicht des in Fig. 1 gezeigten Staubsaugers. Gezeigt sind der Lichtleiter 3 und eine ihm zugeordnetes Lichtquelle 2. Der Lichtleiter 3 ist mit einem kreisrunden Querschnitt ausgebildet. Er weist eine Einkoppeloptik 31 und eine Auskoppeloptik 32 auf. Die Einkoppeloptik 31 und die Auskoppeloptik 32 sind jeweils als Linsen ausgebildet. Jede der beiden Linsen ist konvex. Die Linse der Auskoppeloptik 32 ist zu einer optischen Achse (nicht gezeigt) des Lichtleiters 3 geneigt. Ferner ist ein Lichtkegel 7 gezeigt, der aus der Auskoppeloptik 32 auskoppelt. Der Lichtstrahl tritt nicht symmetrisch d.h. unsymmetrisch zu dem Lichtleiter 3 aus.

Fig. 3 zeigt eine vergrößerte Teil-Seitenansicht des in Fig. 2 gezeigten Lichtleiters 3, wobei ein mittlerer Teil der Übersichtlichkeit weggelassen ist, wie durch die Bruchlinien angedeutet. Die Linse der Auskoppeloptik 32 ist an ihrer Lichtaustrittsfläche zu der optischen Achse 33 des Lichtleiters 3 um einen vorbestimmten Winkel a geneigt. Der vorbestimmte Winkel a beträgt z.B. 12°. Der Lichtleiter 3 weist einen Durchmesser d auf, der z.B. 4 mm beträgt. Die Linse der Auskoppeloptik 32 weist einen Radius r1 auf, der z.B. 4 mm beträgt.

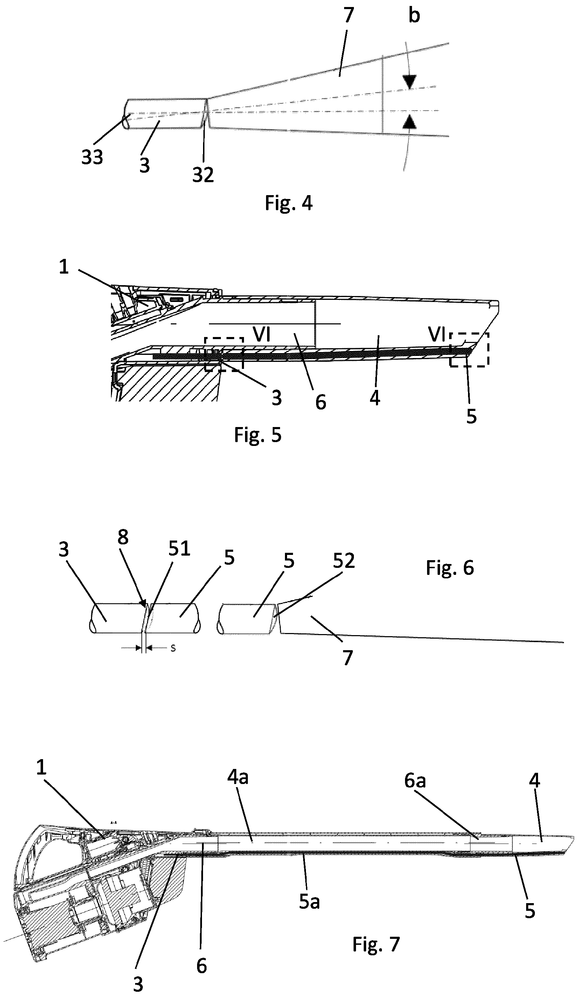

Fig. 4 zeigt eine Teil-Seitenansicht des in Fig. 3 gezeigten Lichtleiters. Gezeigt ist der Lichtleiter 3 mit seiner Auskoppeloptik 32 und ein aus der Auskoppeloptik 32 ausgekoppelter Lichtkegel 7. Wie bereits beschrieben, weist die Auskoppeloptik 32 eine konvexe Linse mit einem Radius (nicht gezeigt) von 4mm auf, die um 12° zur optischen Achse des Lichtleiters 3 geneigt ist. Daraus ergibt sich eine Neigung b des Lichtkegel 7 bzw. Lichtkegels zu der optischen Achse 33 des Lichtleiters 3 um ca. 18°.

Fig: 5 zeigt eine weitere vergrößerte Teil-Seitenansicht des in Fig. 1 gezeigten Staubsaugers. Gezeigt ist ein Teil des Handteils 1, das mit dem Zubehörteil 4 über den Verbindungsabschnitt 6 gekoppelt ist. Das Zubehörteil 4 weist den weiteren Lichtleiter 5 auf. Der weitere Lichtleiter 5 benötigt keine eigene Lichtquelle. Vielmehr weist der Staubsauger eine Beleuchtungseinheit auf, die aus der das Licht erzeugende Lichtquelle (nicht gezeigt) und dem Lichtleitsystem besteht, das den Lichtleiter 3 und den weiteren Lichtleiter 5 umfasst. Der Lichtleiter 3 und der weitere Lichtleiter 5 sind derart ausgebildet und zueinander angeordnet, dass von dem Lichtleiter 3 ausgekoppeltes Licht in den weiteren Lichtleiter 5 einkoppelt.

Fig. 6 zeigt eine vergrößerte Seitenansicht des in Fig. 5 gezeigten Lichtleiters und weiteren Lichtleiters, wobei Teile des Lichtleiters und des weiteren Lichtleiters der Übersichtlichkeit weggelassen ist, wie durch die Bruchlinien angedeutet. Der weitere Lichtleiter 5 weist eine weitere Einkoppeloptik 51 und eine weitere Auskoppeloptik 52 auf, wobei die Einkoppeloptik als konkave Linse und die Auskoppeloptik als konvexe Linsen ausgebildet sind. Der weitere Lichtleiter 5 weist einen gleichen Durchmesser wie der Lichtleiter 3 auf Die Linse der weiteren Einkoppeloptik 51 ist als eine Negativform der Linse der Auskoppeloptik 32 ausgebildet, und die Linse der weiteren Auskoppeloptik 52 ist gleich zu der Linse der Auskoppeloptik 32 ausgebildet. Ein Abstand s zwischen der Linse der Auskoppeloptik 32 und der Linse der weiteren Einkoppeloptik 51 ist kleiner als 0,5 mm. Aus der weiteren Auskoppeloptik 52 koppelt ein kegelförmiger Lichtkegel 7 aus.

Fig. 7 zeigt eine Seitenansicht einer Variante des in Fig. 1 gezeigten Staubsaugers. Der Staubsauger weist mehrere Zubehörteile 4, 4a auf. In Fig. 7 ist der Staubsauger gemäß Fig. 1 gezeigt, bei dem ein Zubehörteil 4a in Form eines Verlängerungsrohr zwischen dem Handteil 1 und dem Zubehörteil 4 angeordnet ist. Das Handteil 1 ist über den Verbindungsabschnitt 6 mit dem Zubehörteil 4a gekoppelt, das wiederum mit dem Zubehörteil 4 mittels eines Verbindungsabschnitts 6a über eine Steckverbindung gekoppelt ist. Auch das Zubehörteil 4a weist einen weiteren Lichtleiter 5a auf, der entsprechend dem weiteren Lichtleiter 5 ausgebildet ist, so dass er zusammen mit der Lichtquelle 2, dem Lichtleiter 3 und dem Lichtleiter 5 das Lichtleitsystem bildet.

### Bezugszeichenliste

- a: Winkel
- b: Neigung
- d: Durchmesser
- r1: Radius
- s: Abstand
- 1: Handteil
- 2: Lichtquelle
- 3: Lichtleiter
- 31: Einkoppeloptik
- 32: Auskoppeloptik
- 33: optische Achse
- 4, 4a: Zubehörteil
- 5, 5a: weiterer Lichtleiter
- 51: weitere Einkoppeloptik
- 52: weitere Auskoppeloptik
- 6, 6a: Verbindungsabschnitt
- 7: Lichtkegel
- 8: Lichtschnittstelle

## Patentansprüche

1. Staubsauger mit einem Handteil (1), das eine Lichtquelle (2) und einen Lichtleiter (3) aufweist, und mindestens einem Zubehörteil (4, 4a), das mit dem Handteil (1) koppelbar ist und einen weiteren Lichtleiter (5, 5a) aufweist, wobei der Lichtleiter (3) eine linsenförmige Oberfläche aufweist, so dass er bei Betrieb als ein Lichtaustrittskörper fungiert, wenn das Handteil (1) und das mindestens eine Zubehörteil (4,4a) entkoppelt sind, und als Lichtkopplungsstelle für den weiteren Lichtleiter (5, 5a) fungiert, wenn das Handteil (1) und das mindestens eine Zubehörteil (4, 4a) gekoppelt sind.

2. Staubsauger nach Anspruch 1, **dadurch gekennzeichnet, dass** der Lichtleiter (3) eine Einkoppeloptik (31) und eine Auskoppeloptik (32) aufweist, die jeweils als Linsen ausgebildet sind.

3. Staubsauger nach Anspruch 2, **dadurch gekennzeichnet, dass** die Linsen konvex sind.

4. Staubsauger nach Anspruch 2 oder 3, **dadurch gekennzeichnet, dass** die Linse der Auskoppeloptik (32) an ihrer Lichtaustrittsfläche zu einer optischen Achse des Lichtleiters (3) um den vorbestimmten Winkel (a) geneigt ist, wobei der vorbestimmte Winkel (a) bevorzugt im Bereich von 10 bis 14° ist.

5. Staubsauger nach Anspruch 4, **dadurch gekennzeichnet, dass** der Lichtleiter (3) einen Durchmesser (d) aufweist und die Linse der Auskoppeloptik (3) einen Radius (r1) aufweist, der dem Durchmesser (d) entspricht oder im Wesentlichen entspricht, wobei der Durchmesser (d) und der Radius (r1) jeweils bevorzugt im Bereich von 2 bis 6 mm liegen.

6. Staubsauger nach einem der vorangehenden Ansprüche 2 bis 5, **dadurch gekennzeichnet, dass** die Linse der Einkoppeloptik (31) parabolisch oder sphärisch ausgebildet ist und/oder dass die Linse der Auskoppeloptik (32) sphärisch ausgebildet ist.

7. Staubsauger nach einem der vorangehenden Ansprüche, **dadurch gekennzeichnet, dass** der weitere Lichtleiter (5) eine weitere Einkoppeloptik (51) und eine weitere Auskoppeloptik (52) aufweist, die jeweils als Linsen ausgebildet sind, wobei die Linse der weiteren Einkoppeloptik (51) als eine Negativform der Linse der Auskoppeloptik (32) ausgebildet ist und die Linse der weiteren Auskoppeloptik (52) gleich oder im Wesentlichen gleich zu der Linse der Auskoppeloptik (32) ausgebildet ist.

8. Staubsauger nach Anspruch 7, **dadurch gekennzeichnet, dass** ein Abstand zwischen der Linse der Auskoppeloptik (32) und der Linse der weiteren Einkoppeloptik (51) kleiner als 0,5 mm ist, wenn das Handteil (1) mit dem mindestens einen Zubehörteil (4, 4a) gekoppelt ist.

9. Staubsauger nach einem der vorangehenden Ansprüche, **dadurch gekennzeichnet, dass** er mehrere Zubehörteile (4, 4a) aufweist, die miteinander koppelbar sind.

10. Staubsauger nach einem der vorangehenden Ansprüche, **dadurch gekennzeichnet, dass** die Lichtquelle (2) als eine LED ausgebildet ist.

## Claims

1. A vacuum cleaner with a hand-held part (1), which has a light source (2) and a light guide (3), and at least one accessory (4, 4a) which is able to be coupled to the hand-held part (1) and has a further light guide (5, 5a), wherein the light guide (3) has a lens-shaped surface such that, during operation, it functions as a light output body when the hand-held part (1) and the at least one accessory (4, 4a) are uncoupled, and functions as a light coupling site for the further light guide (5, 5a) when the hand-held part (1) and the at least one accessory (4, 4a) are coupled.

2. The vacuum cleaner according to claim 1, **characterized in that** the light guide (3) has an incoupling optic (31) and an outcoupling optic (32), which are each designed as lenses.

3. The vacuum cleaner according to claim 2, **characterized in that** the lenses are convex.

4. The vacuum cleaner according to claim 2 or 3, **characterized in that** the lens of the outcoupling optic (32) is inclined at its light output surface relative to an optical axis of the light guide (3) at the predetermined angle (a), wherein the predetermined angle (a) is preferably in the range of 10 to 14°.

5. The vacuum cleaner according to claim 4, **characterized in that** the light guide (3) has a diameter (d) and the lens of the outcoupling optic (3) has a radius (r1) that corresponds to or substantially corresponds to the diameter (d), wherein the diameter (d) and the radius (r1) are each preferably in the range of 2 to 6 mm.

6. The vacuum cleaner according to any of the preceding claims 2 to 5, **characterized in that** the lens of the incoupling optic (31) is parabolic or spherical and/or that the lens of the outcoupling optic (32) is spherical.

7. The vacuum cleaner according to any of the preceding claims, **characterized in that** the further light guide (5) has a further incoupling optic (51) and a further outcoupling optic (52), which are each designed as lenses, wherein the lens of the further incoupling optic (51) is designed as a negative form of the lens of the outcoupling optic (32) and the lens of the further outcoupling optic (52) is designed to be the same or substantially the same as the lens of the outcoupling optic (32).

8. The vacuum cleaner according to claim 7, **characterized in that** a distance between the lens of the outcoupling optic (32) and the lens of the further incoupling optic (51) is less than 0.5 mm when the hand-held part (1) is coupled to the at least one accessory (4, 4a).

9. The vacuum cleaner according to any of the preceding claims, **characterized in that** it has a plurality of accessories (4, 4a) which can be coupled to one another.

10. The vacuum cleaner according to any of the preceding claims, **characterized in that** the light source (2) is designed as an LED.

## Revendications

1. Aspirateur comportant une pièce à main (1) qui présente une source de lumière (2) et un guide de lumière (3), et au moins un accessoire (4, 4a) qui peut être accouplé à la pièce à main (1) et qui présente un guide de lumière supplémentaire (5, 5a), dans lequel le guide de lumière (3) présente une surface lenticulaire, de sorte que, lors du fonctionnement, il agit comme un corps de sortie de lumière lorsque la pièce à main (1) et l'au moins un accessoire (4, 4a) sont désolidarisés, et agit comme un point de couplage de lumière pour le guide de lumière supplémentaire (5, 5a) lorsque la pièce à main (1) et l'au moins un accessoire (4, 4a) sont accouplés.

2. Aspirateur selon la revendication 1, **caractérisé en ce que** le guide de lumière (3) présente une optique de couplage (31) et une optique de découplage (32), qui sont respectivement conçues comme des lentilles.

3. Aspirateur selon la revendication 2, **caractérisé en ce que** les lentilles sont convexes.

4. Aspirateur selon la revendication 2 ou 3, **caractérisé en ce que** la lentille de l'optique de découplage (32) est inclinée, au niveau de sa surface de sortie de lumière, par rapport à un axe optique du guide de lumière (3) selon l'angle (a) prédéterminé, dans lequel l'angle (a) prédéterminé est de préférence compris dans la plage allant de 10 à 14°.

5. Aspirateur selon la revendication 4, **caractérisé en ce que** le guide de lumière (3) présente un diamètre (d) et la lentille de l'optique de découplage (3) présente un rayon (r1) qui correspond ou correspond sensiblement au diamètre (d), dans lequel le diamètre (d) et le rayon (r1) sont respectivement de préférence compris dans la plage allant de 2 à 6 mm.

6. Aspirateur selon l'une des revendications 2 à 5 précédentes,
**caractérisé en ce que** la lentille de l'optique de couplage (31) est de forme parabolique ou sphérique **et/ou en ce que** la lentille de l'optique de découplage (32) est conçue de manière sphérique.

7. Aspirateur selon l'une des revendications précédentes,
**caractérisé en ce que** le guide de lumière supplémentaire (5) présente une optique de couplage supplémentaire (51) et une optique de découplage supplémentaire (52) qui sont conçues respectivement sous forme de lentilles, dans lequel la lentille de l'optique de couplage supplémentaire (51) est conçue sous forme de moule négatif de la lentille de l'optique de découplage (32), et la lentille de l'optique de découplage supplémentaire (52) est conçue de manière identique ou sensiblement identique à la lentille de l'optique de découplage (32).

8. Aspirateur selon la revendication 7, **caractérisé en ce qu'un** écart entre la lentille de l'optique de découplage (32) et la lentille de l'optique de couplage supplémentaire (51) est inférieur à 0,5 mm lorsque la pièce à main (1) est accouplée à l'au moins un accessoire (4, 4a).

9. Aspirateur selon l'une des revendications précédentes, **caractérisé en ce qu'il** présente plusieurs accessoires (4, 4a) pouvant être accouplés entre eux.

10. Aspirateur selon l'une des revendications précédentes,
**caractérisé en ce que** la source de lumière (2) est conçue sous forme de DEL.
